# EUROPEAN PATENT APPLICATION

(11) **EP 4 701 187 A1**
(43) Date of publication of application: **25.02.2026**
(21) Application number: 24793085.2
(22) Date of filing: 22.04.2024
(51) Int. Cl.: H04N 19/46, H04N 19/30, H04N 19/597, H04N 19/93, H04N 19/91, H04N 19/186, H04N 19/70

(54) **MESH DATA TRANSMISSION DEVICE, MESH DATA TRANSMISSION METHOD, MESH DATA RECEPTION DEVICE, AND MESH DATA RECEPTION METHOD**

(30) Priority: 20.04.2023 KR 20230051753
(71) Applicant: LG Electronics Inc., Yeongdeungpo-gu Seoul 07336 (KR)
(72) Inventor: PARK, Hanje, Seoul 06772 (KR)
(74) Representative: Jung, Minkyu
(86) International application number: PCT/KR2024/005383
(87) International publication number: WO 2024/219901

(57) **Abstract**

A mesh data encoding method, according to embodiments, may comprise the steps of: encoding mesh data; and transmitting a bitstream including the mesh data. A mesh data decoding method, according to embodiments, may comprise the steps of: receiving a bitstream including mesh data; and decoding the mesh data.

## Description

### [Technical Field]

Embodiments provide a method for providing point cloud content to provide a user with various services such as virtual reality (VR), augmented reality (AR), mixed reality (MR), and self-driving services.

### [Background Art]

A point cloud is a set of points in a three-dimensional (3D) space. It is difficult to generate point cloud data because the number of points in the 3D space is large.

A large throughput is required to transmit and receive data of a point cloud.

### [Disclosure]

### [Technical Problem]

An object of the present disclosure devised to solve the above-described problems is to provide a point cloud data transmission device, a point cloud data transmission method, a point cloud data reception device, and a point cloud data reception method for efficiently transmitting and receiving a point cloud.

Another object of the present disclosure is to provide a point cloud data transmission device, a point cloud data transmission method, a point cloud data reception device, and a point cloud data reception method for addressing latency and encoding/decoding complexity.

Embodiments are not limited to the above-described objects, and the scope of the embodiments may be extended to other objects that can be inferred by those skilled in the art based on the entire contents of the present disclosure.

### [Technical Solution]

To achieve these objects and other advantages, a method of encoding mesh data according to embodiments may include encoding mesh data, and transmitting a bitstream containing the mesh data. A method of decoding mesh data according to embodiments may include receiving a bitstream containing mesh data, and decoding the mesh data.

### [Advantageous Effects]

The point cloud data transmission method, the point cloud data transmission device, the point cloud data reception method, and the reception device according to embodiments may provide a quality point cloud service.

The point cloud data transmission method, point cloud data transmission device, point cloud data reception method, and point cloud data reception device according to embodiments may achieve various video codec methods.

The point cloud data transmission method, point cloud data transmission device, point cloud data reception method, and point cloud data reception device according to embodiments may provide universal point cloud content such as an autonomous driving service.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:
FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process in a V-MESH compression method according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process in a V-MESH compression method according to embodiments;
FIG. 12 illustrates V-MESH compression inter frame decoding process according to embodiments;
FIG. 13 illustrates a point cloud data transmission device according to embodiments;
FIG. 14 illustrates a point cloud data reception device according to embodiments;
FIG. 15 illustrates an example of combining and coding displacement information and attribute information according to embodiments;
FIG. 16 illustrates a scalable joint encoding method according to embodiments;
FIG. 17 illustrates a method of joint packing of displacement information and attribute information according to embodiments;
FIG. 18 illustrates a method of joint packing of displacement information and attribute information according to embodiments;
FIG. 19 illustrates a scalable joint decoding method according to embodiments;
FIG. 20 illustrates parameter information in a bitstream according to embodiments;
FIG. 21 illustrates a mesh data encoding method according to embodiments; and
FIG. 22 illustrates a mesh data decoding method according to embodiments.

### [Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

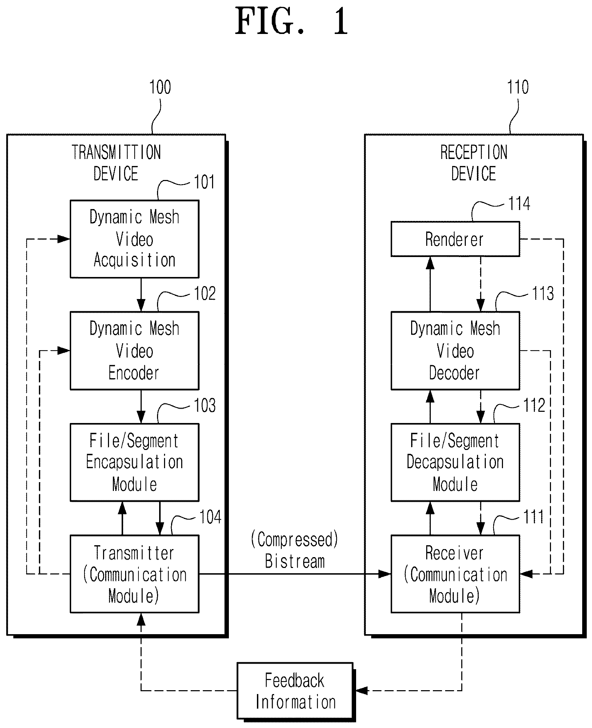

FIG. 1 illustrates a system for providing dynamic mesh content according to embodiments.

The system in FIG. 1 includes a point cloud data transmission device 100 and a point cloud data reception device 110. The point cloud data transmission device may include a dynamic mesh video acquisition unit (or part) 101, a dynamic mesh video encoder 102, a file/segment encapsulator 103, and a transmitter 104. The point cloud data reception device 110 may include a receiver 111, a file/segment decapsulator 112, a dynamic mesh video decoder 113, and a renderer 114. Each component in FIG. 1 may correspond to hardware, software, a processor, and/or a combination thereof. In the following description, a point cloud data transmission device according to embodiments may be interpreted as referring to the transmission device 100 or the dynamic mesh video encoder (hereinafter, encoder) 102. A point cloud data reception device according to embodiments may be interpreted as referring to the reception device 110 or the dynamic mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique. Point cloud data is data that has color information in the coordinates (X, Y, Z) of vertices. Mesh data refers to vertex information including inter-vertex connectivity information. Content may be originally created in the form of mesh data. Connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a video. The generated mesh video may be transmitted through a series of operations, and the receiving side may process the received data back into a mesh video for rendering. Through this process, the mesh video may be provided to the user, allowing the user to utilize the mesh content interactively according to their intent.

A mesh compression system may include a transmission device and a reception device. The transmission device may encode the mesh video to output a bitstream, which may be delivered to the reception device over a digital storage medium or a network in the form of file or streaming (streaming segments). The digital storage medium may include various storage media such as USB, SD, CD, DVD, Blu-ray, HDD, and SSD. The transmission device may schematically include a mesh video acquisition unit, a mesh video encoder, and a transmitter. The reception device may schematically include a receiver, a mesh video decoder, and a renderer. The encoder may be referred to as a mesh video/image/picture/frame encoding device. The decoder may be referred to as a mesh video/image/picture/frame decoding device. A transmitter may be included in the mesh video encoder, and a receiver may be included in the mesh video decoder. The renderer may include a display, and the renderer and/or display may be configured as separate devices or external components. The transmission device and reception device may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinates related to the vertices of the mesh, referred to as UV coordinates or texture coordinates. A mesh contains a 2D attribute map, which may be used to store high-resolution attribute information such as texture, normal, and displacement.

The mesh video acquisition unit may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/frames/pictures. The mesh video encoder may perform a Video-based Dynamic Mesh (V-Mesh) compression procedure. For compression and coding efficiency, the mesh video encoder may perform a series of procedures such as prediction, transformation, quantization, and entropy coding. Encoded data (encoded video/image information) may be output in the form of a bitstream.

The encapsulation processor (file/segment encapsulation module) may encapsulate encoded mesh video data and/or mesh video-related metadata in the form of a file or the like. The mesh video-related metadata may be received from a metadata processor. The metadata processor may be included in the mesh video encoder, or may be configured as a separate component/module. The encapsulation processor may encapsulate the data into a file format such as ISOBMFF or process the same into forms such as DASH segments. According to embodiments, the encapsulation processor may include the mesh video-related metadata in the file format. For example, the mesh video metadata may be included in boxes at various levels in the ISOBMFF file format, or as data on separate tracks in the file. In some embodiments, the encapsulation processor may encapsulate the mesh video-related metadata into a file.

The transmission processor may apply processing to the encapsulated mesh video data for transmission based on the file format. The transmission processor may be included in the transmitter or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter may transmit the encoded video/image information or data output in bitstream form to the receiver of the reception device over a digital storage medium or network in the form of a file or streaming. The digital storage medium may include various storage media such as USB, SD, CD, DVD, Blu-ray, HDD, and SSD. The transmitter may include an element to generate a media file through a predetermined file format, and may include an element for transmission over a broadcast/communication network. The receiver may extract the bitstream and deliver the same to a decoding device.

The receiver may receive the mesh video data transmitted by the mesh video transmission device. Depending on the channel for transmission, the receiver may receive the mesh video data over a broadcast network or a broadband network, or may receive the mesh video data over a digital storage medium.

The reception processor may perform processing on the received mesh video data according to the transmission protocol. The reception processor may be included in the receiver, or may be configured as a separate component/module. To correspond to the processing performed for transmission on the transmitting side, the reception processor may perform the reverse process to the operations of the transmission processor described above. The reception processor may deliver the acquired mesh video data to the decapsulation processor and the acquired mesh video-related metadata to the metadata parser. The mesh video-related metadata acquired by the reception processor may be in the form of a signaling table.

The decapsulation processor (file/segment decapsulation module) may decapsulate mesh video data in the form of files received from the reception processor. The decapsulation processor may decapsulate the files according to ISOBMFF or the like to acquire a mesh video bitstream or mesh video-related metadata (metadata bitstream). The acquired mesh video bitstream may be delivered to the mesh video decoder, and the acquired mesh video-related metadata (metadata bitstream) may be delivered to the metadata processor. The mesh video bitstream may include metadata (metadata bitstream). The metadata processor may be included in the mesh video decoder, or may be configured as a separate component/module. The mesh video-related metadata acquired by the decapsulation processor may be in the form of boxes or tracks in the file format. The decapsulation processor may receive metadata required for decapsulation from the metadata processor, when necessary. The mesh video-related metadata may be delivered to the mesh video decoder for use in the mesh video decoding procedure, or to the renderer for use in the mesh video rendering procedure.

The mesh video decoder may receive the input bitstream and perform an operation corresponding to the operation of the mesh video encoder to decode the video/images. The decoded mesh video/images may be displayed through the display of the renderer. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an MxN block may include a set (or array) of samples (or a sample array) or transform coefficients composed of M columns and N rows.

The encoding process of FIG. 1 is performed as follows.

The compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates (geometry) of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video (or simply as attributes). The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

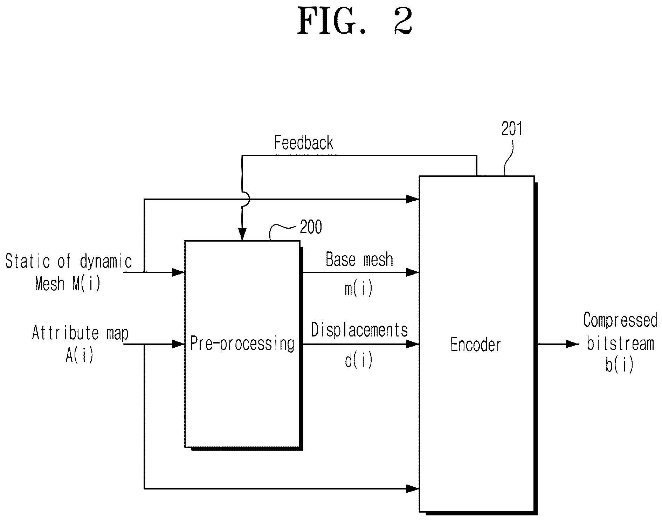

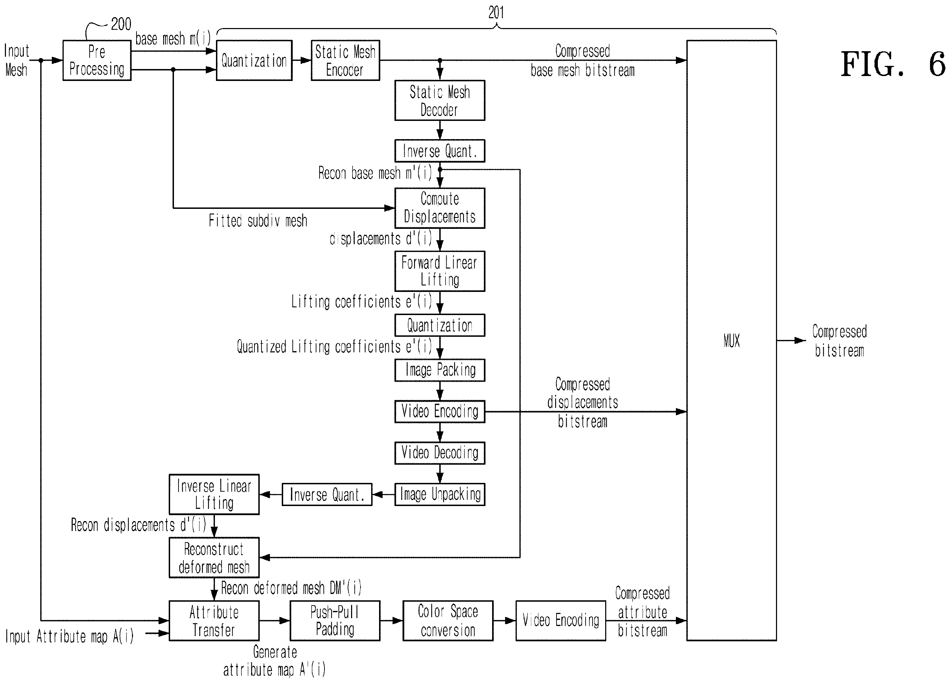

A method of encoding mesh position information (or vertex) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The encoder of FIG. 1 may include a pre-processor 200 and an encoder 201, as shown in FIG. 2. The transmission device of FIG. 1 may be broadly referred to as an encoder, and the dynamic mesh video encoder of FIG. 1 may be referred to as an encoder. The V-Mesh compression method may include pre-processing and encoding 201, as shown in FIG. 2. The pre-processor of FIG. 2 may be positioned at the front end of the encoder of FIG. 2. The pre-processor and encoder of FIG. 2 may be referred to as a single encoder.

The pre-processor may receive a static dynamic mesh and/or an attribute map. The pre-processor may generate a base mesh and/or displacements through pre-processing. The pre-processor may receive feedback information from the encoder, and may generate the base mesh and/or displacements based on the feedback information.

The encoder may receive the base mesh, the displacements, the static dynamic mesh, and/or the attribute map. The encoder may encode the mesh-related data to generate a compressed bitstream.

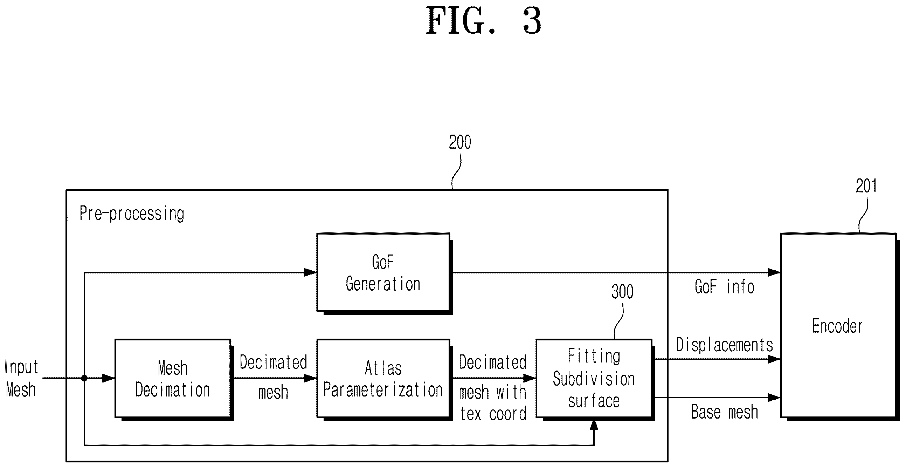

FIG. 3 illustrates pre-processing in V-MESH compression according to embodiments.

FIG. 3 illustrates the configuration and operation of the pre-processor of FIG. 2.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface (300). The pre-processor 200 may receive input mesh, generate displacements and/or a base mesh, and deliver the same to the encoder 201. The pre-processor 200 may deliver GoF information related to the GoF generation to the encoder 201.

Hereinafter, each operation in FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, inter frame encoding may be performed. Otherwise, the frame may be subjected to intra frame encoding.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UV Atlas tool. This process generates mapping information indicating where each vertex of the decimated mesh may be mapped to on the 2D image. The mapping information is expressed and stored as texture coordinates, and the final base mesh is generated through this process.

Fitting subdivision surface: An operation of performing subdivision on the decimated mesh. A user-defined method, such as the mid-edge method, may be applied as the subdivision method. A fitting process is performed such that the input mesh and the subdivided mesh become similar to each other.

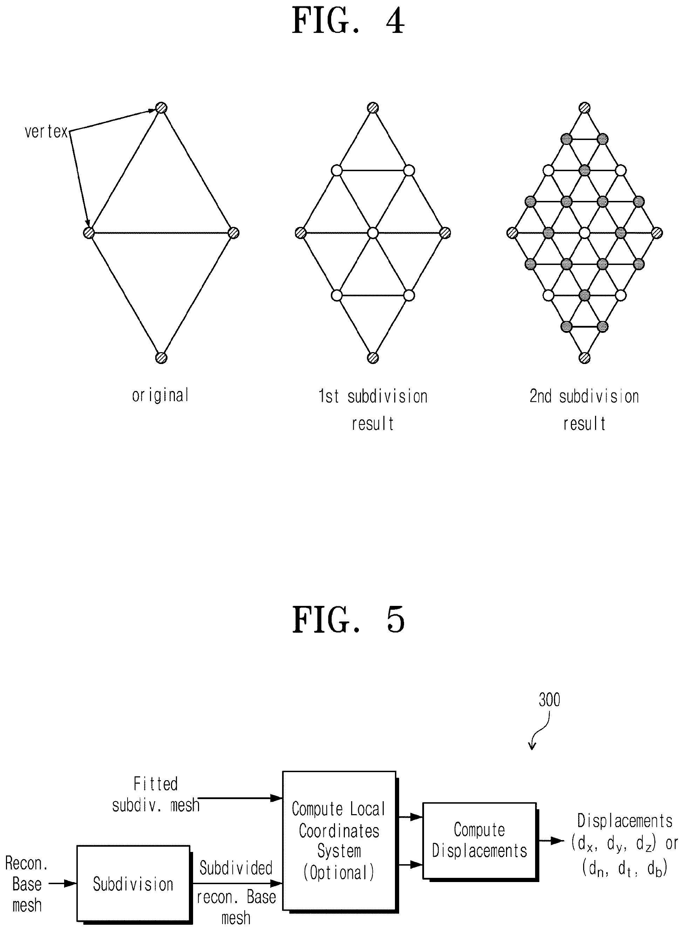

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bitangential) in a local coordinate system.

FIG. 5 illustrates a displacement generation process according to embodiments.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may receive a reconstructed base mesh and generate a subdivided reconstructed base mesh. The local coordinate system calculator may receive the fitted subdivided mesh and the subdivided reconstructed base mesh, and may transform the coordinate system related to the mesh to a local coordinate system. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The point cloud data transmission method and device according to embodiments may encode the point cloud as follows. Point cloud data (which may be referred to as a point cloud for short) according to embodiments may refer to data including vertex coordinates and color information. Point cloud is a term that includes mesh data. The terms point cloud and point cloud data may be used interchangeably herein.

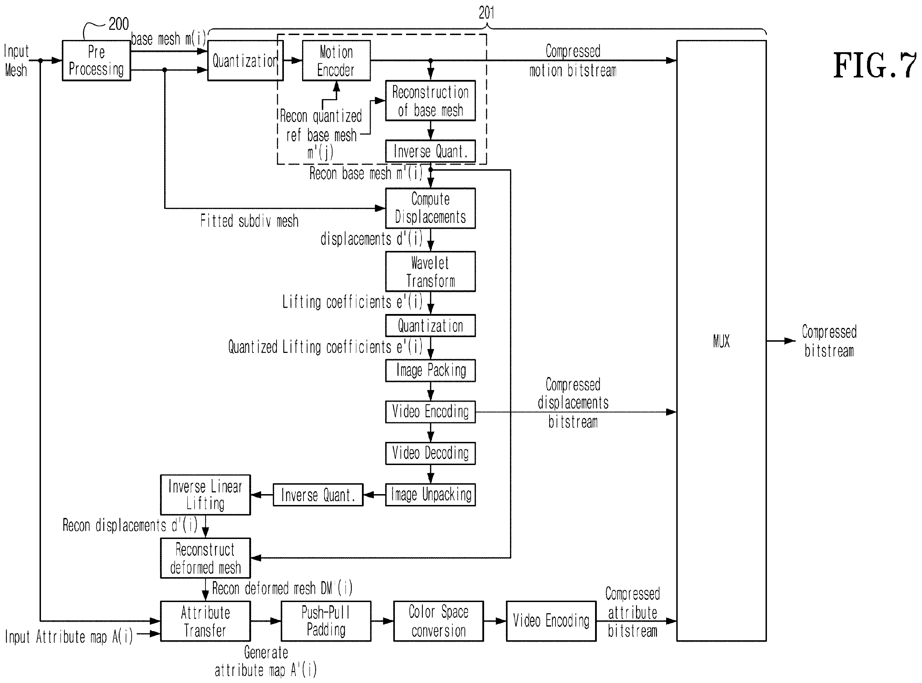

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments.

The encoding process of FIG. 6 details the encoding of FIG. 1. That is, it represents the configuration of the encoder when the encoding of FIG. 1 is intra-frame encoding. The encoder of FIG. 6 may include a pre-processor 200 and/or an encoder 201.

The pre-processor may receive an input mesh and perform the pre-processing described above. A base mesh and/or a fitted subdivided mesh may be generated through the pre-processing. The quantizer may quantize the base mesh and/or the fitted subdivided mesh. The static mesh encoder may encode the static mesh. The static mesh encoder may generate a bitstream containing the encoded base mesh. The static mesh decoder may decode the encoded static mesh. The inverse quantizer may inversely quantize the quantized static mesh. The displacement calculator may receive a reconstructed static mesh, and may generate a displacement, which is the difference in position based on the fitted subdivided mesh. The forward linear lifting unit may receive the displacement and generate lifting coefficients. The quantizer may quantize the lifting coefficients. The image packer may pack the image based on the quantized lifting coefficients. The video decoder decodes the encoded video. The image unpacker may unpack the packed image. The inverse quantizer may inversely quantize the image. The inverse linear lifting unit applies inverse lifting to the image to generate a reconstructed displacement. The mesh reconstructor reconstructs a deformed mesh based on the reconstructed displacement and the reconstructed base mesh. The attribute transfer receives an input mesh and/or an input attribute map and generates an attribute map based on the reconstructed deformed mesh. The push-pull padding unit may pad data to the attribute map based on a push-pull method. The color space converter may convert the space of the color component, which is an attribute. The video encoder may encode the attribute. The multiplexer may multiplex the compressed base mesh, the compressed displacement, and the compressed attribute to generate a bitstream.

FIG. 7 illustrates an inter-frame encoding process in a V-MESH compression method according to embodiments.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201.

For the components of the encoding operation of FIG. 7 that correspond to the encoding operation of FIG. 6, refers to the description of FIG. 7. For inter-frame-based encoding in FIG. 7, the motion encoder may encode a motion based on the reconstructed quantized reference base mesh. The base mesh reconstructor may reconstruct a base mesh based on the reconstructed quantized reference base mesh.

The encoder in FIG. 6 compresses the base mesh, displacement, and attributes within a frame to generate a bitstream, while the encoder in FIG. 7 compresses the motion, displacement, and attributes between the current frame and a reference frame to generate a bitstream.

The encoding method according to the embodiments includes base mesh encoding (intra encoding). When performing intra-frame encoding on a current input mesh frame, the base mesh generated during pre-processing may undergo quantization and be then encoded using a static mesh compression technique. In the V-Mesh compression method, for example, the Draco technique is applied, and the targets to be compressed include vertex position information, mapping information (texture coordinates), vertex connectivity data, etc. related to the base mesh.

The encoding method according to the embodiments may include motion field encoding (also inter encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of this field may be encoded using entropy coding. Except for the motion field encoding in the inter frame encoding, the process of encoding the displacements and attribute map is the same as the structure of the intra frame encoding method except for the base mesh encoding.

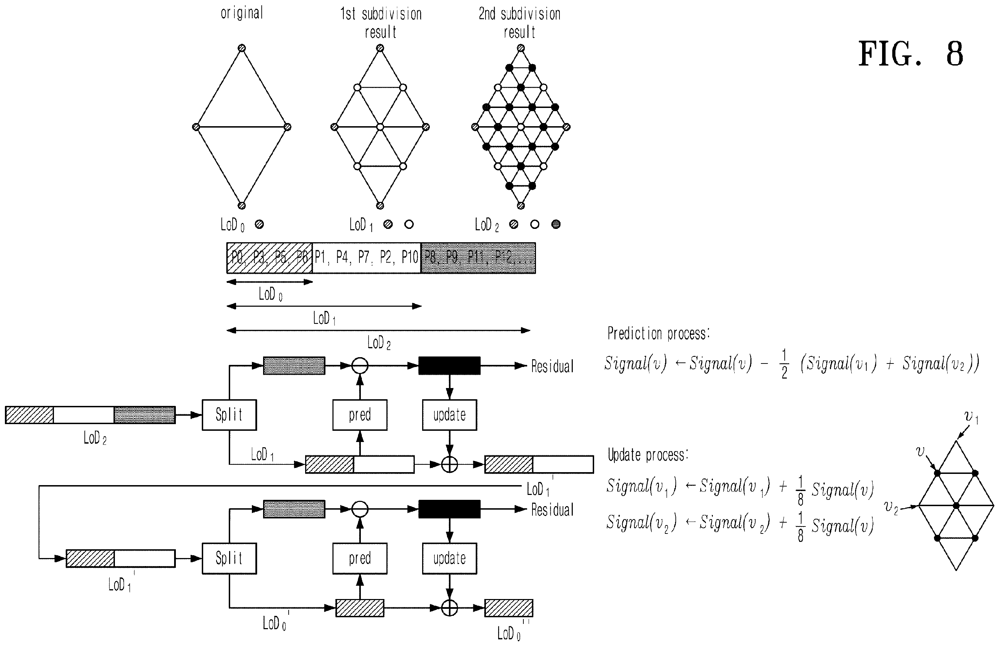

FIG. 8 illustrates a lifting transform process for displacements according to embodiments.

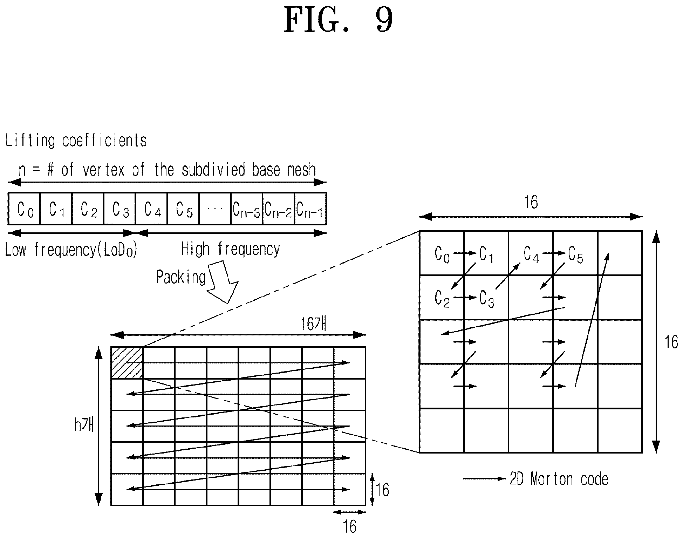

FIG. 9 illustrates a process of packing transform coefficients into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface. A data transform process, such as a wavelet transform, may be applied to the displacement information for effective encoding.

FIG. 8 illustrates the process of transforming displacement information in V-Mesh using the lifting transform. The transform coefficients generated through the transform process are quantized and then packed into a 2D image. The transform coefficients may be organized into blocks, one block for every 256 (=16× 16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded using a conventional video compression codec.

Referring to FIG. 8, the base mesh (original) may include vertices and edges for LoD0. A first subdivision mesh generated by splitting the base mesh includes vertices generated by further splitting the edges of the base mesh. The first subdivision mesh contains vertices for LoD0 and vertices for LoD1. LoD1 includes subdivided vertices and vertices from the base mesh (LoD0). The first subdivision mesh may be split to generate a second subdivision mesh. The second subdivision mesh contains LoD2. LoD2 includes a base mesh vertex (LoD0), LoD1 containing vertices additionally generated from LoD0, and vertices further split from LoD1. LoD is a level of detail that indicates the degree of detail. As the index of the level increases, the distance between vertices is shortened, and the level of detail rises. LoD N contains the vertices contained in LoD N-1. In the case where the vertex is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated based on the residual.

Referring to FIG. 9, a vertex has a coefficient generated through lifting transform. The coefficient of the vertex related to the lifting transform may be packed into an image and then encoded.

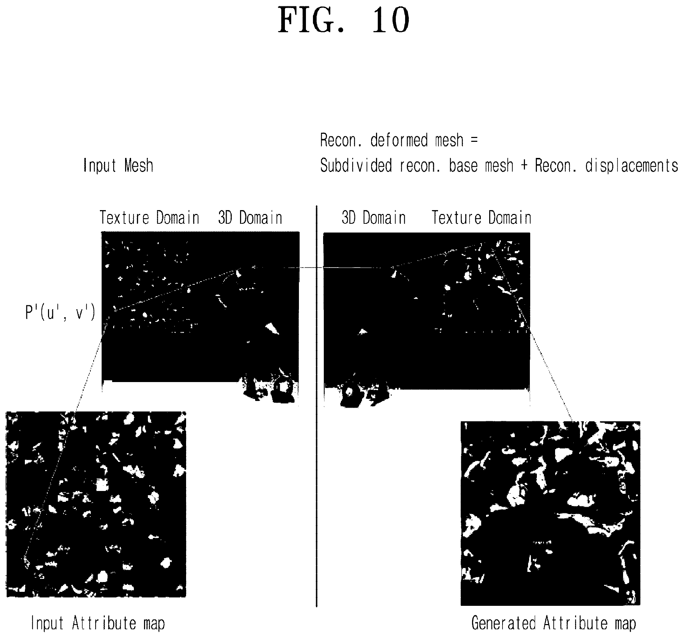

FIG. 10 illustrates an attribute transfer process in a V-MESH compression method according to embodiments.

FIG. 10 illustrates a detailed operation of the attribute transfer in the encoding of FIGS. 6, 7, etc.

The encoding according to the embodiments includes attribute map encoding.

Information about the input mesh is compressed through base mesh encoding, motion field encoding, and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is generated through the attribute transfer process.

The attribute transfer first checks, for every point P(u, v) in the 2D texture domain, whether the corresponding point is within a texture triangle of the Recon. deformed mesh. When the corresponding vertex is in the texture triangle T, the attribute transfer calculates the barycentric coordinates (α, β, γ) of P(u, v) according to the triangle T. Then, it calculates the 3D coordinates M(x, y, z) of P(u, v) based on the 3D vertex positions of the triangle T and (α, β, γ). The vertex coordinates M'(x', y', z') that corresponds to the closest position to the calculated M(x, y, z) and a triangle T' containing this point are searched for in the input mesh domain. Then, the barycentric coordinates (α', β', γ') of M'(x', y', z') in the triangle T' are calculated. The texture coordinates (u', v') are calculated based on the texture coordinates corresponding to the three vertices of triangle T' and (α', β', γ'), and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm.

The new attribute map generated by the attribute transfer is bundled into GoFs to construct an attribute map video, which is compressed using a video codec.

A reference relationship between the input mesh, the input attribute map, the reconstructed mesh, and the generated attribute map may be seen from FIG. 10.

The decoding process of FIG. 1 may perform the reverse of the encoding process of FIG. 1. Specifically, the decoding process is performed as disclosed below.

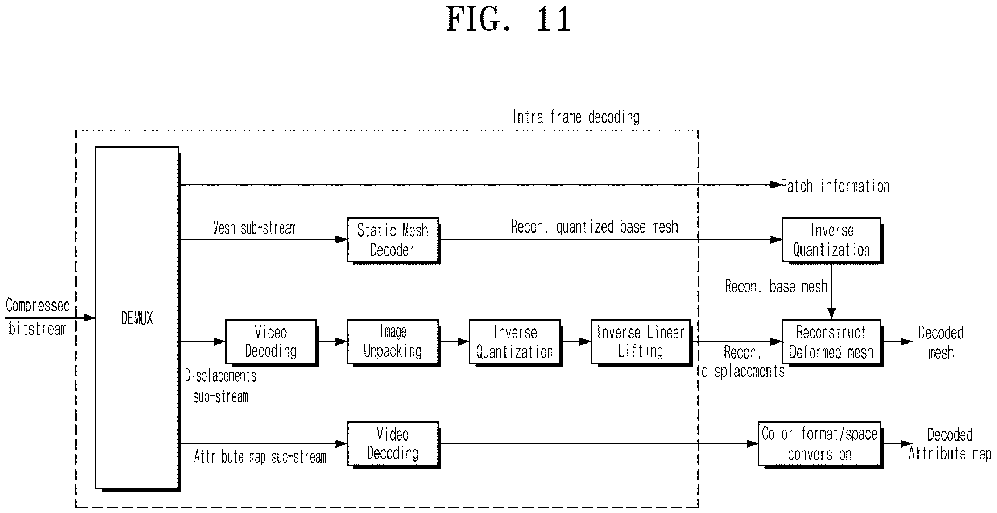

FIG. 11 shows the intra-frame decoding process of the V-MESH compression method according to embodiments.

FIG. 11 illustrates the configuration and operation of the decoder of the reception device of FIG. 1 and the like.

FIG. 11 shows the intra decoding process of the V-Mesh technology according to embodiments. First, the bitstream may be separated into a mesh sub-stream, a displacement sub-stream, an attribute map sub-stream, and a sub-stream containing patch information about the mesh, such as V3C/V-PCC.

The mesh sub-stream may be decoded through the decoder of a static mesh codec used in the encoding such as, for example, Google Draco. As a result, connectivity information, vertex geometry information, vertex texture coordinates, and the like related to the base mesh may be reconstructed. The displacement sub-stream may be decoded into a displacement video through the decoder of the video compression codec used in the encoding. Then, image unpacking, inverse quantization, and inverse transform are performed to reconstruct the displacement information about each vertex. Then, inverse quantization is applied to the reconstructed base mesh, and then the result thereof is combined with the reconstructed displacement information to generate a final decoded mesh.

The attribute map sub-stream is decoded by the decoder of the video compression codec used in the encoding, and then a final attribute map is reconstructed through color format transform and the like.

The reconstructed decoded mesh and decoded attribute map may be utilized at the receiving side as final mesh data that may be utilized by a user.

Referring to FIG. 11, the bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

The decoder performs intra-frame decoding as follows. The static mesh decoder decodes the mesh to generate a reconstructed quantized base mesh, and the inverse quantizer applies the quantization parameters of the quantizer in reverse to generate a reconstructed base mesh. The video decoder decodes the displacement, the unpacker unpacks the decoded video image, and the inverse quantizer inversely quantizes the quantized image. The inverse linear lifting unit applies a lifting transform in the reverse process of the encoder to generate a reconstructed displacement. The mesh reconstructor 630 generates a deformed mesh based on the base mesh and the displacement. The video decoder decodes the attribute map, and the color transformer transforms the color format and/or space to generate a decoded attribute map.

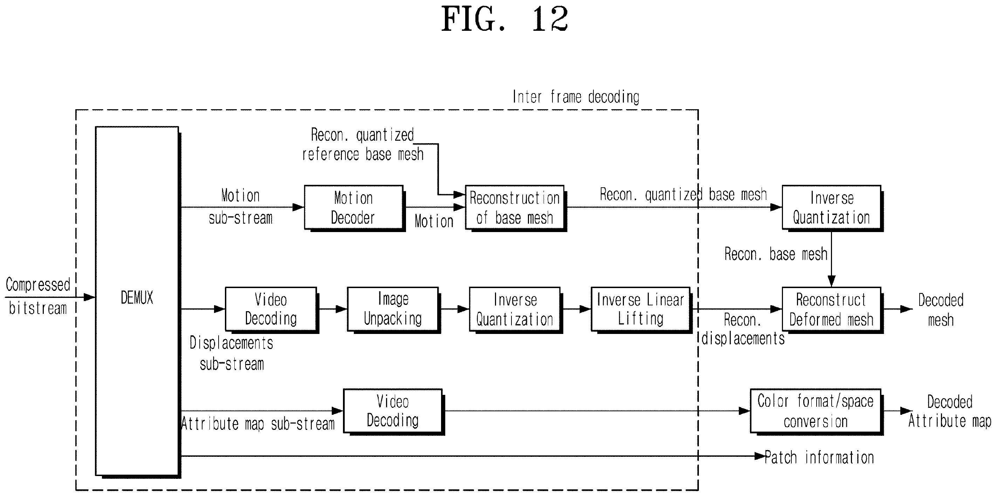

FIG. 12 illustrates an inter-frame decoding process of V-MESH technology.

FIG. 12 illustrates the configuration and operation of the decoder of the reception device of FIG. 1 and the like.

FIG. 12 illustrates the inter decoding process of V-MESH technology. First, the input bitstream may be separated into a motion sub-stream, a displacement sub-stream, an attribute sub-stream, and a sub-stream containing patch information about the mesh, such as V3C/V-PCC.

The motion sub-stream is decoded through entropy decoding and inverse prediction, and the reconstructed motion information is combined with a pre-reconstructed and stored reference base mesh to generate a reconstructed quantized base mesh for the current frame. Then, inverse quantization is applied to the reconstructed quantized base mesh, and the result thereof is combined with the displacement information reconstructed using the same method as the above-described intra decoding to generate a final decoded mesh. The reconstructed decoded mesh and the decoded attribute map may be utilized at the receiving side as the final mesh data that may be utilized by the user.

Referring to FIG. 12, the bitstream contains a motion, displacements, and an attribute map. Because inter-frame decoding is performed, the process further includes decoding the inter-frame motion information. A reconstructed base mesh is generated by decoding the motion and generating a reconstructed quantized base mesh for the motion based on the reference base mesh. For the operations in FIG. 12 that are the same as those in FIG. 11, refer to the description of FIG. 11.

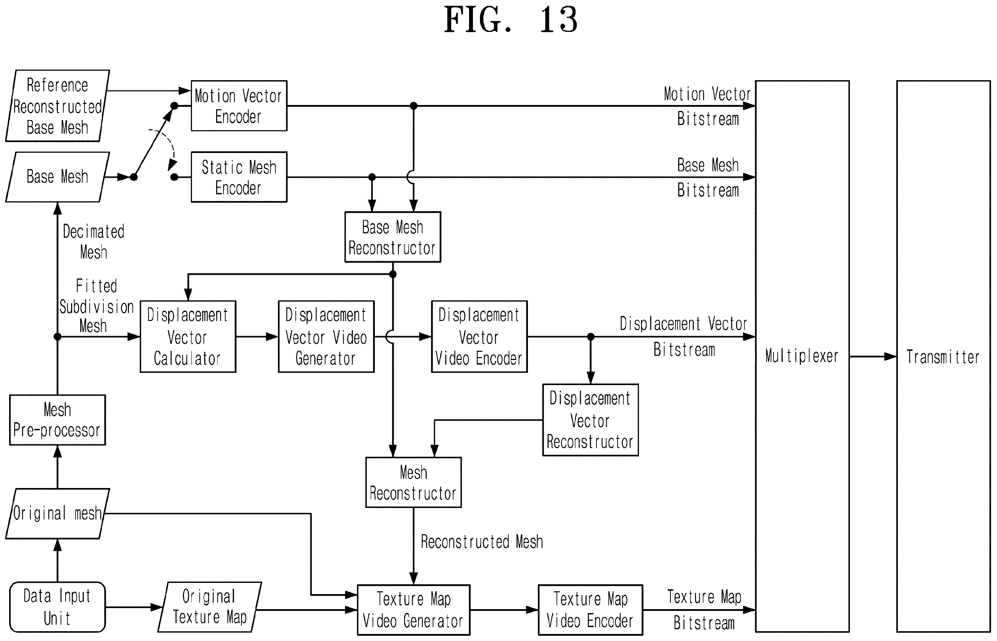

FIG. 13 illustrates a point cloud data transmission device according to embodiments.

FIG. 13 corresponds to the transmission device 100 or dynamic mesh video encoder 102 of FIG. 1, the encoder (pre-processor and encoder) of FIG. 2, and/or the corresponding transmission encoding device. Each component of FIG. 13 corresponds to hardware, software, a processor, and/or a combination thereof.

The process of operations at the transmitting side for compressing and transmitting dynamic mesh data using a V-Mesh compression technique may be configured as shown in FIG. 13.

The mesh pre-processor receives the original mesh and generates a decimated mesh. The decimation may be performed based on a target number of vertices or a target number of polygons constituting the mesh. Parameterization may be performed on the decimated mesh to generate texture coordinates and texture connectivity information per vertex. The mesh information in a floating-point form may be quantized to a fixed-point form. The result is the base mesh, which may be encoded by a static mesh encoder. The mesh pre-processor may perform a mesh subdivision on the base mesh to generate additional vertices. Depending on the subdivision method, vertex connectivity information including the additional vertices, texture coordinates, and connectivity information about the texture coordinates may be generated. A fitted subdivided mesh may be generated by adjusting vertex positions such that the subdivided mesh becomes similar to the original mesh.

When intra-frame encoding (intra encoding) is performed on the mesh frame, the base mesh may be compressed through the static mesh encoder. In this case, the connectivity information, vertex geometry information, vertex texture information, normal information, and the like related to the base mesh may be encoded. The base mesh bitstream generated through the encoding is transmitted to the multiplexer.

When inter-frame encoding (inter encoding) is performed on the mesh frame, the motion vector encoder may operate to receive as input a base mesh and a reference reconstructed base mesh, compute a motion vector between the two meshes, and encode the value thereof. Further, the motion vector encoder may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer.

A reconstructed base mesh may be generated from the encoded base mesh and motion vectors through the base mesh reconstructor.

The displacement vector calculator may perform mesh subdivision on the reconstructed base mesh. A vector may be calculated as a value of the difference in vertex position between the subdivided reconstructed base mesh and the fitted subdivision mesh generated by the pre-processor. As a result, displacement vectors as many as vertices in the subdivided mesh may be calculated. The displacement vector calculator may transform the displacement vectors calculated in the 3D Cartesian coordinate system to a local coordinate system based on the normal vector of each vertex.

The displacement vector video generator may transform the displacement vectors for effective encoding. According to embodiments, the transform may be lifting transform, wavelet transform, or the like. In addition, quantization may be performed on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image. A displacement vector video may be generated by grouping the packed 2D images for each frame. A displacement vector video may be generated for each group of frames (GoF) of the input mesh.

The displacement vector video encoder may encode the generated displacement vector video using a video compression codec. The generated displacement vector video bitstream is transmitted to the multiplexer.

The displacement vectors reconstructed through the displacement vector reconstructor and the base mesh reconstructed and subdivided through the base mesh reconstructor are reconstructed through the mesh reconstructor. The reconstructed mesh has reconstructed vertices, inter-vertex connectivity information, texture coordinates, and inter-texture coordinate connectivity information.

A texture map of a reconstructed mesh may re-generated from the texture map of the original mesh through the texture map video generator. The vertex-by-vertex color information in the texture map of the original mesh may be assigned to the texture coordinates of the reconstructed mesh. A texture map video may be generated by grouping the framelevel re-generated texture maps into GoFs.

The generated texture map video may be encoded by the texture map video encoder using a video compression codec. A texture map video bitstream generated through the encoding is transmitted to the multiplexer.

The generated motion vector bitstream, base mesh bitstream, displacement vector bitstream, and texture map bitstream may be multiplexed into a single bitstream to be transmitted to the receiving side through the transmitter. Alternatively, for the generated motion vector bitstream, base mesh bitstream, displacement vector bitstream, and texture map bitstream, a file with one or more track data may be generated or the bitstreams may be encapsulated into segments and transmitted to the receiving side through the transmitter.

Referring to FIG. 13, the transmitter (encoder) may encode the mesh in an intra-frame or inter-frame manner. According to intra-encoding, the transmission device may generate a base mesh, displacement vectors (or displacements), and a texture map (or attribute map). According to inter-encoding, the transmission device may generate a motion vector (or motion), a base mesh, displacement vectors (or displacements), and a texture map (or attribute map). The texture map acquired from the data input unit is generated and encoded based on the reconstructed mesh. The displacements are generated and encoded based on the differences in vertex positions between the base mesh and the subdivided mesh. The base mesh is generated by pre-processing, decimating, and encoding the original mesh. For the motion, a motion vector is generated for the mesh in the current frame based on the reference base mesh in the previous frame.

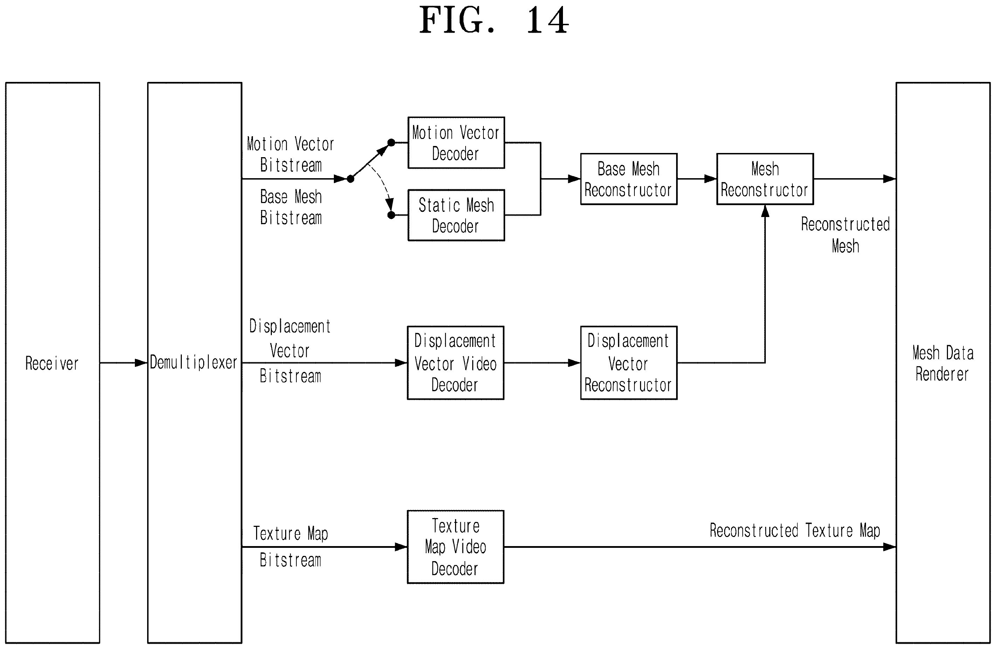

FIG. 14 illustrates a point cloud data reception device according to embodiments.

FIG. 14 corresponds to the reception device 110 or mesh video decoder 113 of FIG. 1, the decoder of FIG. 11 or 12, and/or a corresponding receiving decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of the received mesh is subjected to file/segment decapsulation and then demultiplexed into a compressed motion vector bitstream or base mesh bitstream, a displacement vector bitstream, and a texture map bitstream.

In the case where inter-frame encoding is applied to the current mesh based on the frame header information, the motion vector decoder may decode the motion vector bitstream. The previously decoded motion vector may be used as a predictor and add the same to the residual motion vector decoded from the bitstream to reconstruct the final motion vector.

**In** the case where intra-frame encoding is applied to the current mesh based on the frame header information, the static mesh decoder may decode the base mesh bitstream to reconstruct connectivity information, vertex geometry information, texture coordinates, normal information, and the like related to the base mesh.

In the case where inter-frame encoding is applied to the current mesh, the base mesh reconstructor may add the decoded motion vectors to the reference base mesh and perform inverse quantization to reconstruct the current base mesh. In the case where intra-frame encoding is applied to the current mesh, inverse quantization may be performed on the base mesh decoded by the static mesh decoder to generate a reconstructed base mesh.

The displacement vector video decoder may decode the displacement vector bitstream as a video bitstream using a video codec.

The displacement vector reconstructor extracts displacement vector transform coefficients from the decoded displacement vector video, and reconstructs displacement vectors through inverse quantization and inverse transform. If the reconstructed displacement vectors are values in a local coordinate system, inverse transform to the Cartesian coordinate system may be performed.

The mesh reconstructor may subdivide the reconstructed base mesh to generate additional vertices. Through the subdivision, vertex connectivity information including the additional vertices, texture coordinates, and connectivity information about the texture coordinates may be generated. The subdivided reconstructed base mesh may be combined with the reconstructed displacement vectors to generate a final reconstructed mesh.

The texture map video decoder may decode the texture map bitstream as a video bitstream using a video codec. The reconstructed texture map has color information about each vertex in the reconstructed mesh, and the texture coordinates of each vertex may be used to obtain the color value of the vertex from the texture map.

The reconstructed mesh and texture map are presented to the user through a rendering process using the mesh data renderer or the like.

Referring to FIG. 14, the reception device (decoder) may decode the mesh in an intra-frame or inter-frame manner. According to intra-decoding, the reception device may receive a base mesh, displacement vectors (or displacements), and a texture map (or attribute map), and decode the reconstructed mesh and reconstructed texture map to render mesh data. According to inter-decoding, the reception device may receive a motion vector (or motion), a base mesh, displacement vectors (or displacements), a texture map (or attribute map), and decode the reconstructed mesh and the reconstructed texture map to render mesh data.

A point cloud data transmission device and method according to embodiments may encode the mesh data, and transmit a bitstream containing the encoded mesh data. A point cloud data reception device and method according to embodiments may receive a bitstream containing mesh data and decode the mesh data. The point cloud data transmission/reception method/device according to embodiments may be referred to as a method/device according to embodiments. The point cloud data transmission/reception method/device may also be referred to as a mesh data transmission/reception method/device.

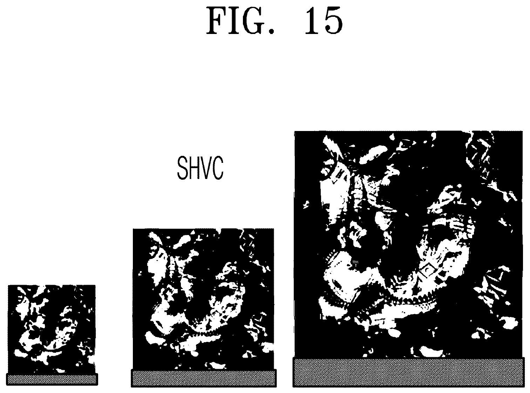

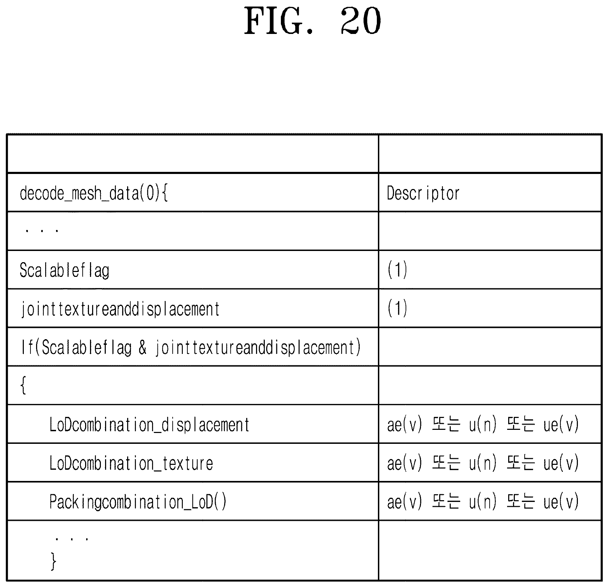

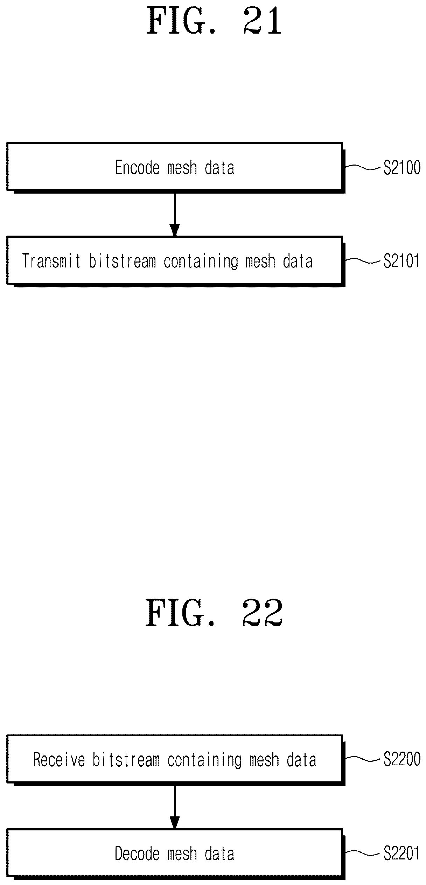

The mesh encoding method and encoder according to embodiments include and perform operations corresponding to the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the encoding of FIGS. 15 to 19, the parameter generation of FIG. 20, and the encoding of FIG. 21.

The mesh decoding method and decoder according to embodiments include and perform operations corresponding to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the encoding of FIGS. 15 to 19, the parameter parsing of FIG. 20, and the decoding of FIG. 22.

A method/device according to embodiments may include and perform a combined packing method of geometric and texture data for dynamic mesh scalable coding.

Embodiments relate to video-based dynamic mesh compression (V-Mesh), a method of compressing 3D dynamic mesh data using a conventional 2D video codec. Based on the structure of standard video based mesh coding, they provide a scalable mesh coding/decoding method in which scalability is applied by including one or more sub-bitstream sets with different resolutions and qualities.

Conventional methods for scalable mesh coding use approaches that can reflect scalability for displacement videos and texture map videos, which are compressed using 2D video codecs in the conventional video-based mesh coding method.

The embodiments include a method of combining and packing a displacement video and texture map information into a single frame. By combining the video codec conventionally used for compression of displacement information with the video codec used for compression of a texture map, coding efficiency may be improved.

According to embodiments, scalable encoding/decoding may be performed on dynamic mesh data, and mesh data with optimal resolution and quality may be selectively reconstructed and provided by a user or system according to a user's reception environment.

Embodiments relate to V-DMC, a method of compressing 3D dynamic mesh data based on a conventional 2D video codec. To effectively perform scalable mesh coding, the method includes combining and packing displacement video and texture map information into a single frame.

FIG. 15 illustrates an example of combining and coding displacement information and attribute information according to embodiments.

Dynamic mesh data, which represents a type of mesh data, which is a form of point cloud data, refers to mesh data about things and/or persons corresponding to objects changing over time, i.e., having motion. The encoding/decoding method according to embodiments includes a method of efficiently encoding/decoding dynamic mesh data. Based on the V-PCC standard, which is a method of compressing point cloud data, dynamic mesh data may be compressed and reconstructed.

In the current V-DMC standard, displacement information generated in the encoding process is converted into a video format and then compressed using a conventional 2D video codec. Texture map information (meaning the same as attribute map) relate to input mesh data is also processed as video and compressed using the existing 2D video codec. The displacement video and the texture map video are generated and encoded based on a resolution set by the user, and are also reconstructed and utilized at the same resolution at the receiving side

Research activities have been conducted to enable scalable coding/decoding in the current V-DMC standard. A video codec (HEVC) is used for displacement representing geometry information. The video codec (HEVC) is also used for texture map coding. In this state, performing scalable coding displacement and texture map on a LoD basis to support a scalable structure may be inefficient. In addition, In practical use, various issues such as a synchronization related issue are likely to occur.

Accordingly, as shown in FIG. 15, embodiments include a method of combining video and information, which are conventionally packed into separate video frames and compressed through video codecs, into the same frame layer. By using scalable HEVC (SHVC) after combining respective layers as shown in FIG. 15, scalability may be supported more efficiently than implementing a scalable structure with two separate video codecs.

Referring to FIG. 15, the encoding method according to embodiments may combine and pack displacement information and attribute information (e.g., texture map) into a single video frame. By packing attribute information into a video frame and packing displacement information of the mesh data into the remaining area, two types of data may be jointly packed into a single frame. The decoding method according to embodiments may unpack the packed data and decode the displacement information and/or attribute information of the corresponding areas at once.

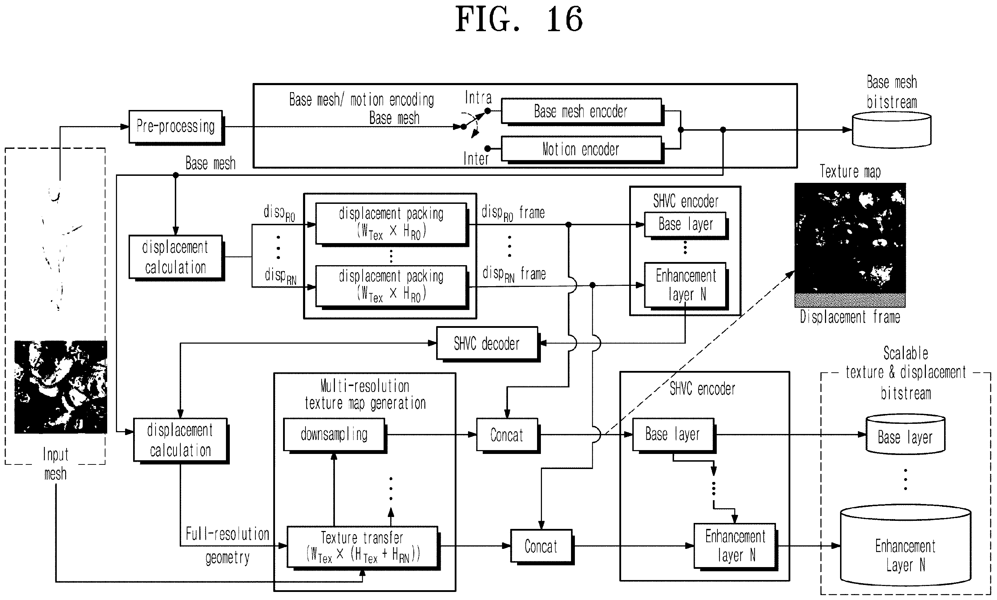

FIG. 16 illustrates a scalable joint encoding method according to embodiments.

A mesh data encoding process according to embodiments is illustrated in FIG. 16.

Pre-processing may simplify the original mesh data to generate a base mesh.

A base mesh encoder may encode the base mesh based on an intra-frame scheme. Prediction of the base mesh may be performed based on the mesh in the current frame, and residuals may be generated and encoded to generate a base mesh bitstream.

A motion encoder may encode the base mesh based on an inter-frame scheme. Prediction of the base mesh may be performed based on the mesh of a reference frame for the current frame, and residuals may be generated and encoded to generate a base mesh bitstream. Motion vectors of the mesh between the current frame and the reference frame may be estimated to compensate for the motion of the current base mesh.

A displacement information calculator may calculate position information about vertices in the base mesh. The displacement information may be displacement vectors representing the position information. Multiple displacement vectors may be configured in a base layer and one or more enhancement layers to be packed and encoded.

A geometry reconstructor may decode the encoded displacement information and reconstruct the position information about the vertices in the base mesh. The position information about vertices required to encode the attribute information about the vertices in the mesh may be reconstructed from the base mesh. Based on the reconstructed geometry, attribute information may be generated at multiple resolutions. To generate multi-resolution texture maps as attribute information, full-resolution geometry may be down-sampled to generate texture maps of various resolutions.

A packer (Concat) may pack the attribute information and displacement information together in a video frame.

The encoding method may include SHVC. Accordingly, mesh data may be scalably encoded based on scalable layers, i.e., a base layer and enhancement layers.

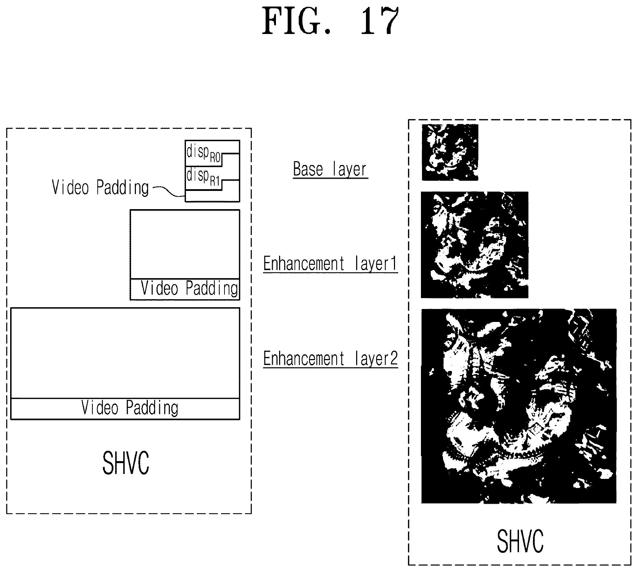

FIG. 17 illustrates a method of joint packing of displacement information and attribute information according to embodiments.

FIG. 17 illustrates in detail the operation of jointly packing displacement information and attribute information (texture map) in the overall encoding process of FIG. 16.

For example, when scalable layers include one base layer and two enhancement layers, displacement information corresponding to a level in each layer and a texture map corresponding to the level may be packed together. The scalable layers may be referred to as a first layer, a second layer, and the like.

The term "level" may refer to a subdivision unit of mesh data, such as level of detail, depth, level, or layer.

When there are displacement information for three levels and attribute information for three levels, the displacement information and attribute information for a first level may be packed into a frame for a first layer, the displacement information and attribute information for a second level may be packed into a frame for a second layer, and the displacement information and attribute information for a third level may be packed into a frame for a third layer.

When the displacement information for the first level and the displacement information for the second level have little difference, they may be packed together as displacement information for a single level within a frame.

Although FIG. 17 shows an example of using SHVC for joint packing of displacement information and attribute information, embodiments are not limited to SHVC. Any scalable encoding/decoding methods may be used.

The operation of packing the displacement information, i.e., displacement vectors, may include converting displacement vectors into displacement vector coefficients, quantizing the displacement vector coefficients, packing the displacement vector coefficients, and encoding a displacement vector image/video.

As illustrated in FIG. 17, displacement vector transform coefficients may be converted into YUV 4:2:0 and placed at the bottom of the texture map. The height of the displacement vector coefficient frame may be fixed to twice the size per layer, and the width may be determined according to the number of displacement vectors per layer. For inter-layer coding of the texture map, the width and height may be maintained to be twice the size of the previous layer.

Here, in accordance with the current V-DMC CTC, the number of geometry (displacement information) LoDs (levels) is determined, and various combinations of LoDs are possible depending on the system or user preference, including the example in FIG. 17. That is, the LoD levels of displacement and the LoD levels of texture maps do not need to be exactly matched as in FIG. 17, and may be combined in various ways.

For example, when there are a texture map of LoD 0, a texture map of LoD 1, a texture map of LoD 2, a texture map of LoD 3, displacement information of LoD R0, displacement information of LoD R1, displacement information of LoD R2, and displacement information of LoD R3, the displacement information of LoD R0 and LoD R1 may be packed together with the texture map of LoD 0 in a frame, the displacement information of LoD R1 may be packed together with the texture map of LoD 1 in a frame, the displacement information of LoD R2 may be packed together with the texture map of LoD 2 in a frame, and the displacement information of LoD R3 may be packed together with the texture map of LoD 3 in a frame.

Slices may be divided per layer within a frame for implementation. For example, Slice 0 may be a region including the texture map, and Slice 1 may be a region including displacement information. Parameters may be controlled for each slice. For example, QP (quantization parameter) adjustment and Lambda value setting may be applied for each.

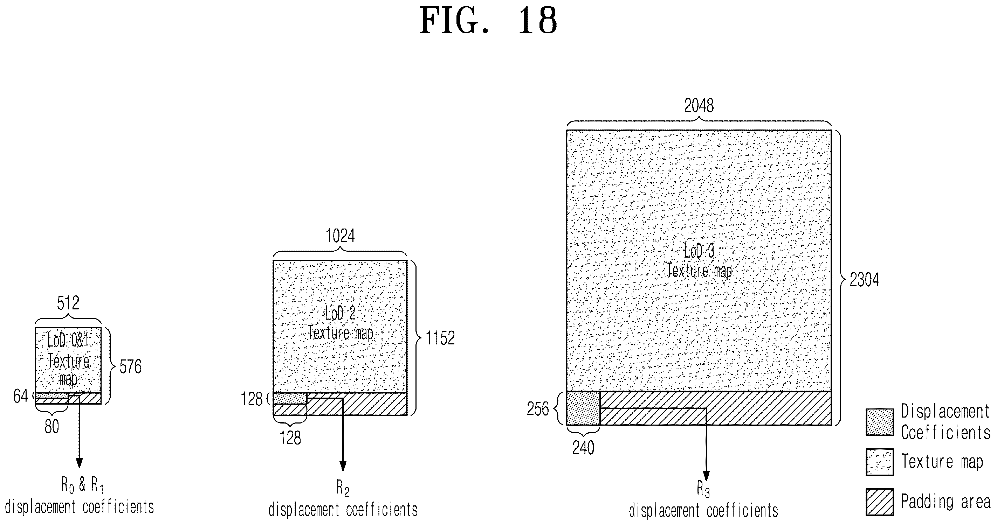

FIG. 18 illustrates a method of joint packing of displacement information and attribute information according to embodiments.

Depending on the size of the texture map for each layer, 16 (256×256), 64 (512×512), 256 (1024×1024), or 1024 (2048×2048) CTUs may be configured as a single slice. The first slice (texture region) and the second slice (displacement vector region) may each be encoded/decoded using the current V-DMC CTC (common test condition) QP.

FIG. 18 illustrates an example of joint packing and encoding of displacement information and attribute information in terms of frame size.

For the first level (layer), when displacement information of LoD R0 and LoD R1 is packed together with attribute information of LoD 0 into the first frame, the width and height of the frame may be 512 and 576, respectively, and displacement information may be packed into an area of width and height equal to 80 and 64 in the remaining area after the texture map is packed.

Similarly, for the second level (layer), when displacement information of LoD R2 is packed together with attribute information of LoD 1 into the second frame, the texture map may first be packed into a frame having the size of 1024 by 1152, and displacement information may be packed into an area having the size of 128 by 128 in the remaining area.

Likewise, for the third level (layer), when displacement information of LoD R3 is packed together with attribute information of LoD 2 into the third frame, the texture map may first be packed into a frame having the size of 2048 by 2304, and displacement information may be packed into an area having the size of 240 by 256 in the remaining area.

The remaining area in the frame for each layer may be filled with padding data.

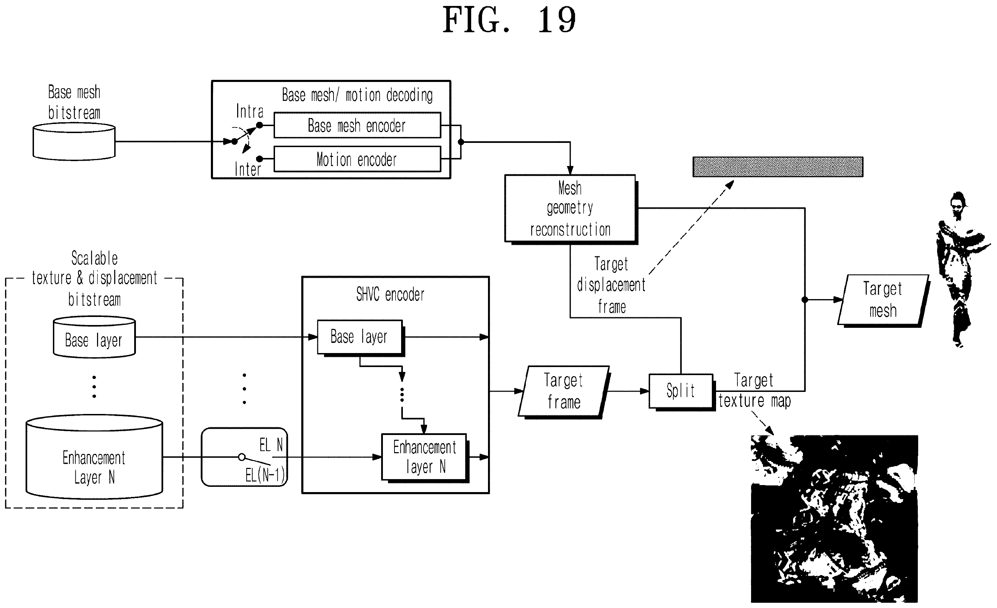

FIG. 19 illustrates a scalable joint decoding method according to embodiments.

FIG. 19 illustrates a decoding method corresponding to the reverse process of the encoding operation in FIG. 16. In the decoding method according to the embodiments, which is the reverse process of the above-described encoding method, mesh data may be decoded based on the scalable joint decoding scheme as illustrated in FIG. 19.

The decoding method according to embodiments may include receiving a base mesh bitstream.

In the case where the base mesh bitstream is compressed based on intra-frame coding, the base mesh is decoded based on to the intra-frame scheme.

In the case where the base mesh bitstream is compressed based on inter-frame coding, the base mesh is decoded based on the inter-frame scheme. The motion vector of the mesh between the current frame and the reference frame may be estimated to compensate for the motion of the current base mesh.

A mesh geometry reconstructor may reconstruct the geometry of the mesh and provide the same for the attribute information decoding process.

The decoding method according to embodiments may include receiving scalably encoded bitstreams and decoding a first layer (base layer) and second layers (enhancement layers).

Then, displacement information and attribute information of the target mesh data may be acquired from the frame. The target displacement information is divided from the frame, and the target attribute information is divided from the frame, thereby reconstructing the original mesh.

FIG. 20 illustrates parameter information in a bitstream according to embodiments.

The encoding method according to embodiments may include generating parameter information related to the operations according to embodiments and transmitting the same in the bitstream as signaling. The signaling information according to embodiments may be used at the transmitting side or the receiving side. The signaling information according to embodiments may be generated and transmitted by a processor (also referred to as a metadata generator) of a transmission device and may be received and acquired by a metadata parser of a reception device. Each operation of the reception device may be performed based on the signaling information.

As VPCC and/or V-DMC extension syntax, the following information may be included in the bitstream. Scalableflag: Indicates whether mesh data is encoded based on scalable layers.

Jointtextureanddisplacement: Indicates whether displacement information and attribute information are jointly packed into a frame as described above with reference to FIG. 16.

LoDcombination _displacement: Indicates the LoD level to which the displacement information packed in each layer belongs.

LoDcombination _texture: Indicates the LoD level of the attribute (texture) information packed in each layer.

Packingcombination _LoD: Information that determines the profile of each LoD level. Packingcombination _LoD may indicate the correspondence between levels of displacement information and attribute information. Packingcombination _LoD may include a profile related to the start point (position) in the packing frame (image) and the position information related to the displacement information.

The parameters in FIG. 20 may further include a starting point and displacement region information. For example, the following parameters may be further included.

num_lods_displacement: Indicates the number of displacements per LoD. It may indicate the number of displacements in the packing frame.

displacement_region_top_left_x Indicates the x-coordinate of the position of the starting point of the displacement region. It may indicate the position of the region where displacement information is packed within the packing frame.

displacement_region_top _left_y Indicates the y-coordinate of the position of the starting point of the displacement region. It may indicate the position of the region where displacement information is packed within the packing frame.

displacement _region_width: Indicates the width of the displacement region. It may indicate the size of the region where displacement information is packed within the packing frame.

displacement_region_height: Indicates the height of the displacement region. It may indicate the size of the region where displacement information is packed within the packing frame.

FIG. 21 illustrates a mesh data encoding method according to embodiments.

The mesh data encoding method in FIG. 21 corresponds to the operations of the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the encoding of FIGS. 15 to 19, the parameter generation of FIG. 20, and the like.

The mesh data encoding method according to the embodiments may include encoding mesh data (S2100).

The mesh data encoding method according to the embodiments may further include transmitting a bitstream containing the mesh data (S2101).

Referring to FIG. 16, operation S2100 of encoding the mesh data may include encoding a base mesh of the mesh data; generating displacement information; generating attribute information based on the displacement information; and packing the displacement information and the attribute information based on a layer of the displacement information and a layer of the attribute information.

Referring to FIG. 17, the packing may include packing the displacement information for a first level of detail and the attribute information for the first level of detail into a frame for a first layer, and packing the displacement information for a second level of detail and the attribute information for the second level of detail into a frame for a second layer.

Referring to FIG. 18, the displacement information for the first level of detail may be packed below the attribute information for the first level of detail in the frame for the first layer.

Referring to FIG. 20, the bitstream may contain at least one in a group selected from information (Scalableflag) indicating whether the mesh data is scalably encoded into a plurality of layers, information (Jointtextureanddisplacement) indicating whether displacement information and attribute information are jointly packed, level information (LoDcombination_displacement) related to the displacement information packed into the layers, or level information (LoDcombination _texture) related to the attribute information packed into the layers.

In addition, the bitstream may contain at least one of information (num_lods_displacement) indicating the number of pieces of displacement information for each of the levels, position information (displacement_region_top_left_x and displacement_region_top_left_y) related to a region of the displacement information, or size information (displacement _region _width and displacement _region _height) related to the region of the displacement information.

The encoding method of FIG. 21 may be performed by an encoding device (encoder). The device may include a memory; and a processor configured to execute one or more instructions stored in the memory, wherein the processor may be configured to encode mesh data, and transmit a bitstream containing the mesh data.

FIG. 22 illustrates a mesh data decoding method according to embodiments.

The mesh decoding method in FIG. 22 corresponds to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the encoding of FIGS. 15 to 19, the parameter parsing of FIG. 20, and the like.

The mesh decoding method according to the embodiments may include receiving a bitstream containing mesh data (S2200).

The mesh decoding method may further include decoding the mesh data (S2201).

Referring to FIG. 19, operation S2201 of decoding the mesh data may include decoding a base mesh of the mesh data, and decoding displacement information and attribute information in the bitstream based on a layer of the displacement information and a layer of the attribute information.

The bitstream may contain a frame for a first layer including the displacement information for a first level of detail and the attribute information for the first level of detail, and a frame for a second layer including displacement information for a second level of detail and attribute information for the second level of detail.

The displacement information for the first level of detail may be positioned below the attribute information for the first level of detail in the frame for the first layer.

Referring to FIG. 20, the bitstream may contain at least one in a group selected from information (Scalableflag) indicating whether the mesh data is scalably encoded into a plurality of layers, information (Jointtextureanddisplacement) indicating whether displacement information and attribute information are jointly packed, level information (LoDcombination_ displacement) related to the displacement information packed into the layers, or level information (LoDcombination _texture) related to the attribute information packed into the layers.

In addition, the bitstream may contain at least one of information (num_lods_displacement) indicating the number of pieces of displacement information for each of the levels, position information (displacement_region_top_left_x and displacement_region_top_left_y) related to a region of the displacement information, or size information (displacement_region_width and displacement _region _height) related to the region of the displacement information.

Operation S2201 of decoding the mesh data may include decoding displacement information related to a level and attribute information related to the level included in a frame for each layer of the bitstream, based on parameters in the bitstream.

The decoding method of FIG. 22 may be performed by a decoding device (decoder). The decoding device may include a memory, and a processor configured to execute one or more instructions stored in the memory, wherein the processor may be configured to receive a bitstream containing mesh data, and decode the mesh data.

Embodiments may provide the following technical effects. The V-Mesh compression method is designed such that displacement vector videos and texture map videos generated during the encoding process are compressed and reconstructed using a video codec based on the overall resolution. As a result, in cases where it is difficult to receive and utilize the entire mesh data depending on the receiver's conditions, the transmitted mesh data cannot be used.

To address this issue, embodiments provide a scalable mesh decoding/partial decoding method that allows the mesh to be selectively reconstructed and utilized at the receiving side. Embodiments include a method of combining video and information, which are conventionally packed into separate video frames and compressed through video codecs, into the same frame layer. By using SHVC after combining respective layers, scalability may be supported more efficiently than implementing a scalable structure with two separate video codecs.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

Various embodiments have been described in the best mode for carrying out the disclosure.

### [Industrial Applicability]

As described above, the embodiments may be fully or partially applied to the point cloud data transmission/reception device and system.

It will be apparent to those skilled in the art that various changes or modifications may be made to the embodiments within the scope of the embodiments.

Thus, it is intended that the embodiments cover modifications/variations provided they come within the scope of the appended claims and their equivalents.

## Claims

1. A method of decoding mesh data, the method comprising:
receiving a bitstream containing mesh data; and
decoding the mesh data.

2. The method of claim 1, wherein the decoding of the mesh data comprises:
decoding a base mesh of the mesh data; and
decoding displacement information and attribute information in the bitstream based on a layer of the displacement information and a layer of the attribute information.

3. The method of claim 2, wherein the bitstream contains:
a frame for a first layer including the displacement information for a first level of detail and the attribute information for the first level of detail; and
a frame for a second layer including displacement information for a second level of detail and attribute information for the second level of detail.

4. The method of claim 3, wherein the displacement information for the first level of detail is positioned below the attribute information for the first level of detail in the frame for the first layer.

5. The method of claim 1, wherein the bitstream contains at least one of:
information indicating whether the mesh data is scalably encoded into a plurality of layers;
information indicating whether displacement information and attribute information are jointly packed;
level information related to the displacement information packed into the layers; or
level information related to the attribute information packed into the layers.

6. The method of claim 4, wherein the bitstream contains at least one of:
information indicating the number of pieces of the displacement information for each of the levels;
position information related to a region of the displacement information; or
size information related to the region of the displacement information.

7. The method of claim 1, wherein the decoding of the mesh data comprises:
decoding displacement information related to a level and attribute information related to the level included in a frame for each layer of the bitstream, based on parameters in the bitstream.

8. A device for decoding mesh data, comprising:
a memory; and
a processor configured to execute one or more instructions stored in the memory, the processor being configured to:
receive a bitstream containing mesh data; and
decode the mesh data.

9. A method of encoding mesh data, the method comprising:
encoding mesh data; and
transmitting a bitstream containing the mesh data.

10. The method of claim 9, wherein the encoding of the mesh data comprises:
encoding a base mesh of the mesh data;
generating displacement information;
generating attribute information based on the displacement information; and
packing the displacement information and the attribute information based on a layer of the displacement information and a layer of the attribute information.

11. The method of claim 10, wherein the packing comprises:
packing the displacement information for a first level of detail and the attribute information for the first level of detail into a frame for a first layer; and
packing the displacement information for a second level of detail and the attribute information for the second level of detail into a frame for a second layer.

12. The method of claim 11, wherein the displacement information for the first level of detail is packed below the attribute information for the first level of detail in the frame for the first layer.

13. The method of claim 9, wherein the bitstream contains at least one of:
information indicating whether the mesh data is scalably encoded into a plurality of layers;
information indicating whether displacement information and attribute information are jointly packed;
level information related to the displacement information packed into the layers; or
level information related to the attribute information packed into the layers.

14. The method of claim 9, wherein the bitstream contains at least one of:
information indicating the number of pieces of displacement information for each level;
position information related to a region of the displacement information; or
size information related to the region of the displacement information.

15. A device for encoding mesh data, comprising:
a memory; and
a processor configured to execute one or more instructions stored in the memory, the processor being configured to:
encode mesh data; and
transmit a bitstream containing the mesh data.
